# EUROPEAN PATENT APPLICATION

(11) **EP 4 011 824 A1**
(43) Date of publication of application: **15.06.2022**
(21) Application number: 20212335.2
(22) Date of filing: 08.12.2020
(51) Int. Cl.: C01B 3/00, B01J 31/12, B01J 31/18, B01J 31/24, C01B 32/50

(54) **METHOD AND SYSTEM FOR CHEMICAL STORAGE OF HYDROGEN**

(71) Applicant: APEX ENERGY TETEROW GMBH, 17166 Teterow (DE)
(72) Inventor: Sponholz, Peter, 18055 Rostock (DE); Ryabchuk, Pavel, 1970 Wezembeek-Oppem (BE); Agapova, Anastasiya, 1970 Wezembeek-Oppem (BE); Sang, Rui, Liao cheng, Shandong (CN); Jackstell, Ralf, 18106 Rostock (DE); Junge, Henrik, 18147 Rostock (DE); Beller, Matthias, 18211 Nienhagen (DE)
(74) Representative: Gulde & Partner

(57) **Abstract**

An aspect of the disclosure relates to a method for a reversible chemical storage of hydrogen. Said method comprises a hydrogenation step in which hydrogen is converted into a C₁-C₁₈ alkyl formate as to chemically store the hydrogen, and a (subsequent) dehydrogenation step, in which hydrogen is released from said C₁-C₁₈ alkyl formate. The hydrogenation step comprises contacting hydrogen with carbon dioxide and a C₁-C₁₈ alcohol in the presence of a hydrogenation catalyst in order to effect the storage of hydrogen by forming a C₁-C₁₈ alkyl formate (and water). The dehydrogenation step comprises converting the C₁-C₁₈ alkyl formate into hydrogen and carbon dioxide in the presence of water, a base and either a transition-metal hydride catalyst or a precursor of the transition-metal hydride catalyst or a heterogeneous transition-metal catalyst. The transition-metal hydride catalyst comprises a metal-ion selected from the group consisting of Ru, Ir, Mn, Co, Mo, Fe and Rh and at least one hydride ligand coordinated to the metal-ion. Further the transition-metal hydride catalyst comprises a tridentate ligand, or one or two of a bidentate ligand, or a tetradentate PPPP-chelating ligand, which is coordinated to the metal-ion to form the transition-metal hydride catalyst. The tridentate ligand is selected from the group consisting of a *PNP*-chelating ligand, a *PNN*-chelating ligand, a *PCP*-chelating ligand, an *NCN-*chelating ligand, a *PCN*-chelating ligand, a *PPP*-chelating ligand and an *NNN-*chelating ligand. The a tetradentate *PPPP*-chelating ligand. Further, the bidentate ligand is selected from a *PP*-chelating ligand or an *NN*-chelating ligand.

## Description

### Field of the Invention

The invention relates to the field of chemical storage of hydrogen, in particular the development of efficient and selective catalyst systems.

### Technological Background

In the last decades, the importance of renewable energies from wind and sunlight has steadily increased. However, to ensure a sufficient and sustainable energy supply, efficient solutions for storing the generated electrical energy are required to compensate for the fluctuating availability of wind and sunlight. In that context, excess energy from windmills and photovoltaic plants is increasingly being stored in the form of hydrogen gas using conventional water electrolysis.

Although hydrogen gas could offer the opportunity of an on-demand energy supply, the safe storage of this highly flammable gas remains a challenging task. Efficient handling and storage methods are therefore key factors that need to be addressed for the successful introduction of H₂ into our energy infrastructure.

Besides the above-mentioned safety requirements, a storage system should further possess satisfying volumetric as well as gravimetric H₂ capacities, reasonable refuelling times and an adequate lifespan. Further, it must be energetically efficient and available at reasonable costs.

To date mainly physical methods such as compression and liquefaction as well as chemical storage in form of metal hydrides are applied for hydrogen storage. However, these methods are associated with energy losses up to 40% and in part low gravimetric energy densities. Alternatively, carbon compounds such as CO₂ or unsaturated aromatic compounds, e.g. toluene and naphthalene (so-called Liquid Organic Hydrogen Carriers, LOHC), can be used for chemical hydrogen storage. In that context, the dehydrogenated form of the LOHC reacts with hydrogen in a hydrogenation reaction. The hydrogenation is an exothermic reaction and is carried out at increased pressures (approx. 30-50 bar) and temperatures of approx. 150-200°C in the presence of a catalyst. The corresponding saturated compound is formed, which can be stored or transported under ambient conditions. If the hydrogen is needed again, the now hydrogenated, hydrogen-rich form of the LOHC is dehydrogenated, whereby the hydrogen is released from the LOHC again. This reaction is endothermic and occurs at elevated temperatures (250-320 °C) again in the presence of a catalyst.

That is, the overall storage process comprises two sub-processes including the loading of appropriate substrates with hydrogen and on-demand hydrogen release from the hydrogen carriers. Thus, the basis for the development of a reversible chemical H₂ storage technology is the interconnection of the hydrogenation of hydrogen poor substrates to the hydrogen rich derivatives and the on-demand dehydrogenation of the latter in a continuous and reproducible manner.

The first example of a reversible CO₂-based H₂ storage cycle dates to 1994. Leitner *et al.* demonstrated that the formic acid adduct produced in the presence of [Rh(COD)CI]₂/DPPB in an acetone/NEt₃ mixture under 40 bar H₂/CO₂ at ambient temperature, could be directly dehydrogenated upon release of the overpressure (Leitner et al., J. Organomet. Chem. 1994, 475, 257-266). Till that time, the hydrogenation of C-based compounds either to formic acid or methanol has been extensively investigated. However, dehydrogenation of methanol in the presence of heterogeneous catalysts requires high temperatures (200-300°C typically in a steam reforming process) and generates carbon monoxide (CO), which deteriorates the efficiency of the electrodes when applied in reformed methanol fuel cells (RMFC).

As mentioned above LOHC constitute a promising option for hydrogen storage. These organic compounds contain extended π-conjugated electron systems, such as in polycyclic aromatic hydrocarbons and heterocycles or π-conjugated organic polymers. Their potential hydrogen storage capacity is normally 5.8 wt.% to 7.2 wt.%. Recently, compounds like N-ethyl carbazole and dibenzyltoluene have been considered as alternatives for toluene or decaline due to their advantageous boiling and hazard properties. However, the release of hydrogen from LOHC is highly endothermic and high temperatures are required. In fact, the dehydrogenation requires temperatures between 200°C and 300°C in order to overcome the 268 to 289 kcal that are needed to release 1 mol of hydrogen gas. A variety of heterogeneous catalysts, mainly based on Pd and Pt, but also on Ru, Rh, Ir and Ni, have been employed for the dehydrogenation of LOHC. For instance, US 4970254 A discloses a process for hydrogen storage and release from a polymeric LOHC, which contains ethylenic unsaturated groups or both aromatic and ethylenic unsaturated moieties. Further, US 7101530 B2, US 7351395 B1 and US 7429372 B2 disclose a process for hydrogen storage and release by using a list of π-conjugated substrates such as large polycyclic aromatic (six and/or five membered rings) hydrocarbons. Those polycyclic aromatic hydrocarbons might contain nitrogen or oxygen heteroatoms, and can further contain alkyl, alkoxy, ketone, ether or polyether as the functional group.

Another potential hydrogen carrier that has been rather neglected so far is methyl formate (MF). Compared to pressurized hydrogen at 200 bars with a volumetric density of 16 g L⁻¹, methyl formate has an improved hydrogen content of 65 g L⁻¹ or 6.7 wt.%, which is in between those of methanol (12.6 wt.%) and formic acid (4.4 wt%) and comparable to that of LOHC (5.8-7.2 wt.%). However, a significant advantage of methyl formate is the much lower toxicity.

While the hydrogenation step, *i.e.* the CO₂-based methyl formate production has already been extensively described, the literature lacks of selective catalytic processes for the dehydrogenation of methyl formate.

An example for the hydrogenation step is disclosed in DE 102012014159 A1, which describes a process for methyl formate generation from CO₂, H₂ and methanol including both the synthesis and separation steps. In this process homogeneous catalysts of element of VIII (8-9) are used, the catalysts are recycled by phase-separation based on the different polar of the solvent and finally methyl formate is obtained by a reactive distillation column. The required methanol can be generated based on CO₂ hydrogenation. While homogeneous catalysts in CO₂ hydrogenation to methanol (> 9,500 turnovers) are not yet as productive (Kar et al., J. Am. Chem. Soc. 2019, 141, 3160-3170), up to 3,500 tons per year are produced applying heterogeneous catalysts, e.g. in the "George Olah CO₂ to Renewable Methanol Plant" in Iceland (Olah, Angew. Chem. Int. Ed. 2013, 52, 104-107).

Regarding dehydrogenation, US 2015/0086473 A1 discloses a method for efficiently producing hydrogen from an alcohol, formic acid, or a formate salt in the presence of a catalyst containing an organometallic compound including bidentate ligands.

However, there is a continuing need to develop more effective and selective catalyst systems for the reversible chemical storage of hydrogen, especially in view of reduced carbon monoxide formation.

### Summary of Invention

The objective of the invention is solved and the disadvantages of the prior art are overcome, at least partially, by the method for a reversible chemical storage of hydrogen according to the appended claims.

An aspect of the disclosure relates to a method for a reversible chemical storage of hydrogen. Said method comprises a hydrogenation step in which hydrogen is converted into a C₁-C₁₈ alkyl formate as to chemically store the hydrogen, and a (subsequent) dehydrogenation step, in which hydrogen is released from said C₁-C₁₈ alkyl formate. The hydrogenation step comprises contacting hydrogen with carbon dioxide and a C₁-C₁₈ alcohol in the presence of a hydrogenation catalyst in order to effect the storage of hydrogen by forming a C₁-C₁₈ alkyl formate (and water). The dehydrogenation step comprises converting the C₁-C₁₈ alkyl formate into hydrogen and carbon dioxide in the presence of (stoichiometric amounts of) water, a base and either a transition-metal hydride catalyst or a precursor of the transition-metal hydride catalyst or a heterogeneous transition-metal catalyst. The transition-metal hydride catalyst comprises a metal-ion selected from at least one of the group consisting of Ru, Ir, Mn, Co, Mo, Fe and Rh and at least one hydride ligand coordinated to the metal-ion. Further the transition-metal hydride catalyst comprises a tridentate ligand, or one or two of a bidentate ligand, or a tetradentate PPPP-chelating ligand, which is coordinated to the metal-ion to form the transition-metal hydride catalyst. The tridentate ligand is selected from the group consisting of a *PNP*-chelating ligand, a *PNN-*chelating ligand, a PCP-chelating ligand, an *NCN*-chelating ligand, a *PCN*-chelating ligand, a PPP-chelating ligand and an *NNN*-chelating ligand. The tetradentate ligand is a PPPP-chelating ligand. Further, the bidentate ligand is selected from a PP-chelating ligand or an *NN-*chelating ligand.

A second aspect of the disclosure refers to a reversible chemical storage system for hydrogen construed for performing the method described above.

Further preferred embodiments of the invention result from the following description.

### Brief Description of the Drawings

- Figure 1: illustrates a schematic cycle of the reversible chemical storage of hydrogen.

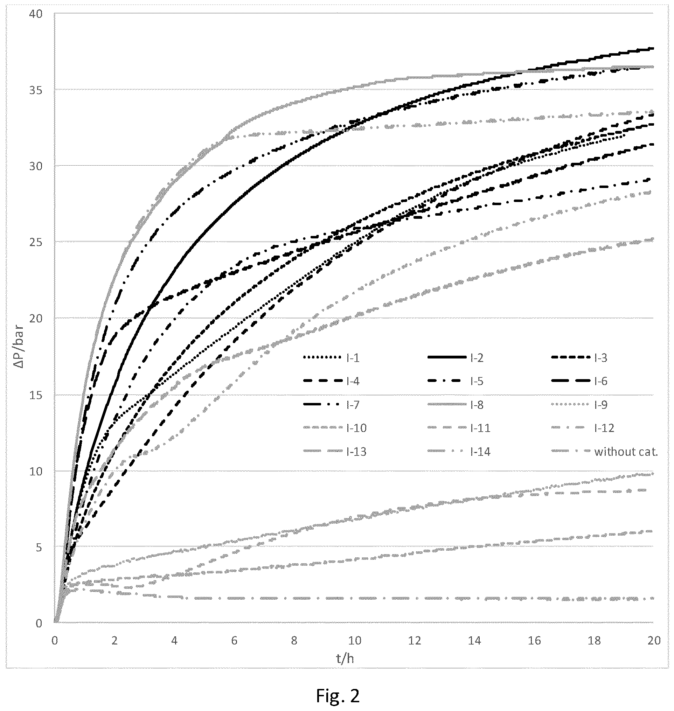

- Figure 2: shows the activity of transition-metal hydride catalysts I-1 to I-14 in the acceptorless dehydrogenation of methyl formate. The pressure increase (p/[bar]) corresponds to the catalytically induced release of hydrogen and carbon dioxide over time (t/[h]).
- Figure 3: shows the influence of the water content on the acceptorless dehydrogenation of methyl formate in the presence of catalyst I-2. The pressure increase (p/[bar]) corresponds to the catalytically induced release of hydrogen and carbon dioxide over time (t/[h]).
- Figure 4: shows the influence of the temperature on the acceptorless dehydrogenation of methyl formate in the presence of catalyst I-2. The pressure increase (p/[bar]) corresponds to the catalytically induced release of hydrogen and carbon dioxide over time (t/[h]).
- Figure 5: shows the influence of the base content (KOH in [mmol]) on the acceptorless dehydrogenation of methyl formate in the presence of catalyst I-2. The pressure increase (p/[bar]) corresponds to the catalytically induced release of hydrogen and carbon dioxide over time (t/[h]).
- Figure 6: shows the influence of the bases KOH, NaOH, LiOH, CsOH, K₂CO₃ and K₃PO₄ on the acceptorless dehydrogenation of methyl formate in the presence of catalyst I-2. The pressure increase (p/[bar]) corresponds to the catalytically induced release of hydrogen and carbon dioxide over time (t/[h]).
- Figure 7: shows the acceptorless dehydrogenation of methyl formate, methanol and formic acid over time in the presence of catalyst I-2. The pressure increase (p/[bar]) corresponds to the catalytically induced release of hydrogen and carbon dioxide over time (t/[h]).
- Figure 8: shows a start/stop run of the acceptorless dehydrogenation of methyl formate in the presence of catalyst 1-1. The reaction was stopped by cooling the reaction mixture to room temperature and releasing of the gas, and subsequently restarted by heating to 90°C. The pressure increase (p/[bar]) corresponds to the catalytically induced release of hydrogen and carbon dioxide over time (t/[h]).
- Figure 9: shows the acceptorless dehydrogenation of methyl formate, ethyl formate and amyl formate over time in the presence of catalyst I-2. The pressure increase (p/[bar]) corresponds to the catalytically induced release of hydrogen and carbon dioxide over time (t/[h]).
- Figure 10: shows the activity of selected heterogeneous transition-metal catalysts in the acceptorless dehydrogenation of methyl formate. The pressure increase (p/[bar]) corresponds to the catalytically induced release of hydrogen and carbon dioxide over time (t/[h]).

### Detailed Description of the Invention

Hereinafter, a method for the reversible chemical storage of hydrogen will be described in detail, and with reference to specific embodiments.

The method comprises a hydrogenation step and a dehydrogenation step. The hydrogenation comprises contacting hydrogen with carbon dioxide and a C₁-C₁₈ alcohol in the presence of a hydrogenation catalyst to effect storage of hydrogen by forming a C₁-C₁₈ alkyl formate. In a preferred embodiment, the C₁-C₁₈ alcohol is formed by carbon dioxide utilization, e.g. by hydrogenation of carbon dioxide to methanol in the presence of a hydrogenation catalyst. The formation of the C1-C18 alcohol and the C₁-C₁₈ alkyl formate may be catalysed in the presence of the same or different hydrogenation catalysts.

The dehydrogenation step comprises converting the C₁-C₁₈ alkyl formate into hydrogen and carbon dioxide in the presence of (stoichiometric amounts of) water, a base and either a transition-metal hydride catalyst or precursor thereof, or a heterogeneous transition-metal catalyst. The (homogeneous) transition-metal hydride catalyst comprises a metal-ion selected from the group consisting of Ru, Ir, Mn, Co, Mo, Fe and Rh and at least one hydride ligand coordinated to the metal-ion. The transition-metal hydride catalyst further comprises one or two of a polydentate ligand coordinated to the metal-ion, which is i) a tridentate ligand selected from the group consisting of a *PNP*-chelating ligand, a *PNN-*chelating ligand, a PCP-chelating ligand, an *NCN*-chelating ligand, a *PCN*-chelating ligand, a PPP-chelating ligand and an *NNN*-chelating ligand, or ii) a bidentate ligand selected from a PP-chelating ligand or an *NN*-chelating ligand, or iii) a tetradentate PPPP-chelating ligand. In the case of the tridentate ligands and the tetradentate ligands it is preferably one ligand that coordinates (complexes) the metal ion. In case of a bidentate ligand it is one or two bidentate ligands coordinated to the metal ion. The transition-metal hydride catalyst may further comprise a halide coordinated to the metal-ion.

In one embodiment, the transition-metal hydride catalyst comprises a metal-ion selected from at least one of the group consisting of Ru, Ir, Mn, and Fe. Preferably, the metal-ion is selected from at least one of the group consisting of Ru, Ir and Mn. In another preferred embodiment the metal-ion is Ru or Ir.

The dehydrogenation step in presence of a precursor of the transition-metal hydride catalyst is understood in terms of forming the transition-metal hydride catalyst in situ by means of the precursor. The precursor may comprise a metal ion source selected from the group consisting of Ru, Ir, Mn, Co, Mo, Fe and Rh ion sources, and 1 to 10 molar equivalents of the bidentate ligand or the tridentate ligand or the tetradentate ligand as introduced above. Preferably, the precursor comprises the metal ion source and 2 to 6 molar equivalents of the bidentate ligand or the tridentate ligand or the tetradentate ligand.

The metal ion source may be a transition metal complex capable of forming the transition-metal hydride catalyst via ligand exchange reaction with a hydride ligand and/or with the abovementioned polydentate ligands. Non limiting examples for said metal ion source may include dichloro(benzene)ruthenium(II) dimer (CAS: 37366-09-9), (acetylacetonato)-dicarbonyl-rhodium(I) (CAS: 14874-82-9) and iron(II) tetrafluoroborate hexahydrate (CAS: 13877-16-2). In a preferred embodiment the metal ion source includes Ru, Ir, Mn, and Fe ion sources. Preferably, the metal ion source is dichloro(benzene)ruthenium(II) dimer or iron(II) tetrafluoroborate hexahydrate. The transition-metal hydride catalyst may be formed in situ from the precursor via oxidative addition of hydrogen or dehydrohalogenation.

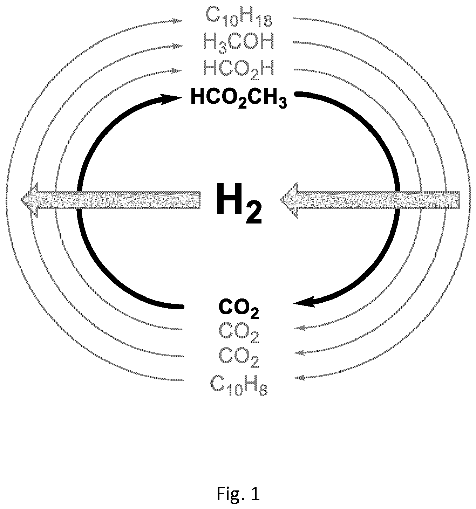

A hydrogen storage cycle schematically shown in figure 1 describes the general concept of chemically storage and release of hydrogen. The present method comprises the hydrogenation of carbon dioxide in the presence of a hydrogenation catalyst to yield a C₁-C₁₈ alkyl formate (e.g. methyl formate (HCO₂CH₃)) and the release of hydrogen by dehydrogenation of said C₁-C₁₈ alkyl formate in the presence of dehydrogenation catalyst, e.g. a transition-metal hydride catalyst or heterogeneous transition-metal catalyst, and in the absence of a hydrogen acceptor. In a preferred embodiment the C₁ - C₁₈ alkyl formate is a C₁ - C₆ alkyl formate and the C₁ - C₁₈ alcohol is a C₁ - C₆ alcohol. More preferably, the C₁ - C₁₈ alkyl formate is a methyl formate or an ethyl formate due to low toxicity compared to formic acid or toluene, respectively, the C₁ - C₁₈ alcohol is methanol or ethanol.

The hydrogenation catalyst may be any literature-known heterogeneous or homogeneous catalyst capable of providing a C₁-C₁₈ alkyl formate from C₁-C₁₈ alcohol, hydrogen and carbon dioxide. An example for a suitable hydrogenation catalyst may be found in DE 102012014159 A1.

In one embodiment, the tridentate ligand of the transition-metal hydride catalyst may be a *PNP* chelating ligand or a *PNN* chelating ligand.

In a preferred embodiment, the tridentate ligand of the transition-metal hydride catalyst is a *PNP* chelating ligand according to formula (II):

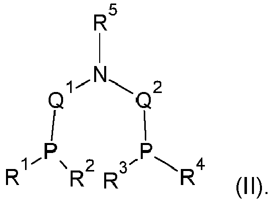

Q¹ and Q² in formula (II) are independently selected from the group consisting of C₂-C₆ alkylene group and C₅-C₇ cycloalkylene group. In formula (II), the substituents at the phosphor moieties R¹, R², R³ and R⁴ are independently selected from at least one of the group consisting of C₁-C₆ alkyl group, C₃-C₇ cycloalkyl group, C₆-C₁₄ aryl group, C₂-C₉ heteroaryl group and benzyl. Preferably, R¹, R², R³ and R⁴ are independently selected from the group consisting of *iso*-propyl, *tert*-butyl, phenyl and ethyl. R⁵ is selected from the group consisting of H, C₁ - C₈ alkyl group and C₃-C₇ cycloalkyl group.

In another preferred embodiment, Q¹ and Q² in formula (II) are independently selected from the group consisting of C₂-C₆ alkylene group and C₅-C₇ cycloalkylene group; the substituents at the phosphor moieties R¹, R², R³ and R⁴ are independently selected from the group consisting of C₁-C₆ alkyl group, C₃-C₇ cycloalkyl group, C₆-C₁₄ aryl group, C₂-C₉ heteroaryl group and benzyl; R¹, R², R³ and R⁴ are independently selected from the group consisting of *iso*-propyl, *tert*-butyl, phenyl and ethyl; and R⁵ is selected from the group consisting of H, methyl, ethyl, *iso*-propyl, *tert*-butyl, cylcohexyl.

In yet another preferred embodiment, Q¹ and Q² in formula (II) are independently selected from the group consisting of C₂-C₆ alkylene group and C₅-C₇ cycloalkylene group; the substituents at the phosphor moieties R¹, R², R³ and R⁴ are independetly selected from the group consisting of C₁-C₆ alkyl group, C₃-C₇ cycloalkyl group, C₆-C₁₄ aryl group, C2-C9 heteroaryl group and benzyl; R¹, R², R³ and R⁴ are independently selected from the group consisting of *iso*-propyl, *tert-butyl,* phenyl and ethyl; and R⁵ is H or methyl.

In a preferred embodiment, the transition-metal hydride catalyst is selected from at least one of the group of complexes according to formulae I-1 to I-8:

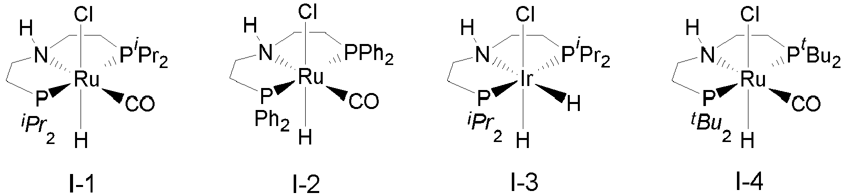

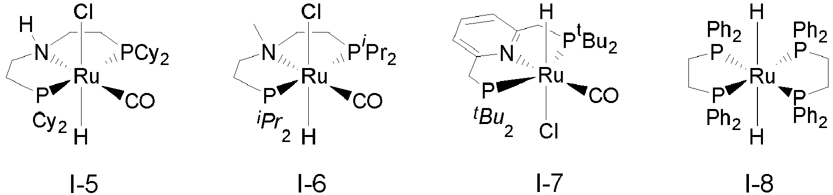

In another embodiment, the precursor of the transition-metal hydride catalyst is selected from at least one of the group of compounds according to formulae I-9 to I-14:

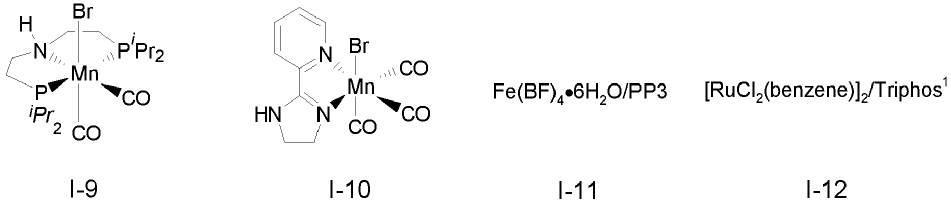

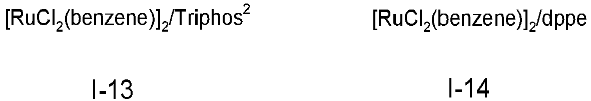

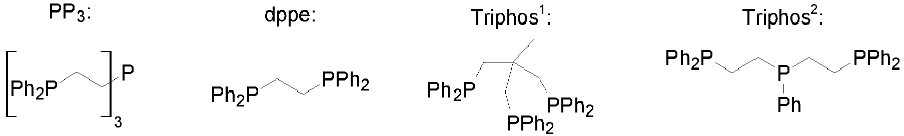

Herein the precursor may comprise a metal ion source [M] and a polydentate ligand [L], shown above as [M]/[L], e.g. RuCl₂(benzene)/dppe. The precursor may comprise 1 to 6 molar equivalents of the polydentate ligand [L] referred to the metal ion source [M]. In a preferred embodiment, the precursor may comprise 6 molar equivalents of the polydentate ligand [L] referred to the metal ion source [M].

In a preferred embodiment, the transition-metal hydride catalysts may be selected from the group complexes consisting of 1-1, I-2, I-3, I-7 and I-8 due to high catalytic activity and low carbon monoxide formation. Preferably, the precursor is I-14.

The transition-metal hydride catalyst may be present at 0.001 mol% to 0.01 mol%, preferably 0.002 mol% to 0.006 mol% (referred to 1 mol of the C₁-C₁₈ alkyl formate) providing high catalytic efficiency and thus economic benefits.

In an embodiment, the dehydrogenation step is performed in presence of a heterogeneous transition-metal catalyst, which comprises at least one of a metal selected from at least one of the group consisting of ruthenium, palladium, platinum and cobalt.

In another embodiment, the dehydrogenation step is performed in presence of a heterogeneous transition-metal catalyst selected from at least one of the group consisting of ruthenium on Al₂O₃ (5 wt.% Ru), palladium on Al₂O₃ (5 wt.% Pd), platinum on Al₂O₃ (5 wt.% Pt) and CoNₓ on carbon (2.2 wt.% CoNₓ). Preferably, the heterogeneous transition-metal catalyst is ruthenium on Al₂O₃ (5 wt.% Ru) as it provides best catalytic hydrogen release combined with low carbon monoxide formation.

The presence of a base in the dehydrogenation step may activate the transition-metal hydride catalyst by deprotonation at the pincer ligand (e.g. deprotonation of NH-group) and formation of alkali halide salts with the halide ligand of the transition-metal hydride catalyst, i.e. creating a vacant coordination site for the substrate at the transition metal.

In one embodiment the base is selected from at least one of the group consisting of NaH, LiOH, NaOH, KOH, CsOH, LiOEt, NaOEt, KOEt, KOC(CH₃)₃, LiHCO₃, NaHCO₃, KHCO₃, CsHCO₃, Li₂CO₃, Na₂CO₃, K₃PO₄, K₂CO₃ and Cs₂CO₃. Preferably, the base is selected from at least one of the group consisting of KOH, LiOH, CsOH, NaOH and K₃PO₄, as these bases provide an optimal catalyst activation and low carbon monoxide formation. In another preferred embodiment the base is KOH. The K₃PO₄ used herein may be anhydrous K₃PO₄ (CAS: 7778-53-2). The base may be present at 5 mol% to 35 mol% referred to the C₁-C₁₈ alkyl formate. Preferably, the base is present at 11 mol% to 24 mol% referred to the C₁-C₁₈ alkyl formate in order to maximize the catalytic hydrogen release and to minimize carbon monoxide formation.

In another embodiment, water is present at 1.5 to 2.5 equivalents per mol C₁ - C₁₈ alkyl formate. Preferably, water is present at 1.9 to 2.1 equivalents per mol C₁ - C₁₈ alkyl formate in order to maximize the catalytic hydrogen release and to minimize carbon monoxide formation. Most preferred, water is present at 2.0 equivalents per mol C₁ - C₁₈ alkyl formate.

In another embodiment, the dehydrogenation step is performed at a reaction temperature of 20°C to 150°C, which represents a considerable energy saving compared to the state of art, which requires reaction temperatures above 200°C. Preferably, dehydrogenation step is performed at a reaction temperature of 40°C to 90°C in order to maximize the catalytic hydrogen release and to minimize carbon monoxide formation.

In one embodiment, the hydrogenation catalyst corresponds to the transition-metal hydride catalyst or to the heterogeneous transition-metal catalyst, that is, the hydrogenation step and dehydrogenation step may be performed in presence of the same catalyst.

A second aspect of the disclosure refers to a reversible chemical storage system for hydrogen construed for performing the method described above. The reversible chemical storage system for hydrogen may comprise a reactor construed for the hydrogenation step and a separate reactor construed for the dehydrogenation step according to the method described above. In another embodiment, the hydrogenation step and dehydrogenation step is performed in the same reactor. The reactor may be an autoclave or any reactor suitable for controlling the reaction temperature and the pressure conditions during dehydrogenation or hydrogenation reactions. The reversible chemical storage system for hydrogen may further comprise a hydrogen fuel cell configured to transform the hydrogen released from the dehydrogenation step into electric energy. The reversible chemical storage system for hydrogen may further comprise an electrolysis cell to provide hydrogen used for the hydrogenation step of the method described above.

A **"transition-metal hydride catalyst"** used herein refers to a transition-metal hydride complex in which at least one hydride (H) and one or two polydentate ligands (chelating ligand) coordinate to a transition-metal forming an (octahedral) complex. The catalytic activity of said transition-metal hydride catalyst may be induced by releasing one or more ligands in order to create a free coordination site at the transition-metal for coordination of the substrate, i.e. for coordination of methyl formate or water.

A **"chelating ligand"** used herein refers to a polydentate ligand, e.g. a bidentate, a tridentate or a tetradentate ligand, capable of forming a chelate complex with a (transition-) metal ion. The prefix indicates the type of chelating ligand referring to the atoms that coordinate the metal ion centre. For example, in case of a *"PNP* chelating ligand", the prefix *"PNP"* indicates the coordination sites of the ligand to the metal ion, here via a phosphor atom, a nitrogen atom and phosphor atom. Non-limiting examples may include a PP chelating ligand (phosphor - phosphor), *NN* chelating ligand (nitrogen - nitrogen), *PNN* chelating ligand (phosphor - nitrogen - nitrogen), *PCP* chelating ligand (phosphor - carbon - phosphor), *NCN* chelating ligand (nitrogen - carbon - nitrogen), *PCN* chelating ligand (phosphor - carbon - nitrogen), *PPP* chelating ligand (phosphor - phosphor- phosphor), *NNN* chelating ligand (nitrogen - nitrogen - nitrogen) and *PPPP* chelating ligand (phosphor - phosphor- phosphor - phosphor). Non-limiting examples for a bidentate chelating ligand may include 1,2-bis(diphenylphosphino)ethane (dppe; CAS: 1663-45-2) or 1,2-bis(dicyclohexylphosphino)ethane (CAS: 23743-26-2). Further non limiting examples for tridentate ligands may include bis(2-diphenylphosphinoethyl)phenylphosphine (Triphos²; CAS: 23582-02-7) or 1,1,1-tris(diphenylphosphinomethyl)ethane (Triphos¹; CAS: 22031-12-5). An example for a tetradentate chelating ligand may be tris[2-(diphenylphosphino)ethyl]phosphine (PP₃; CAS: 23582-03-8).

A "hydrogen acceptor" used herein refers to a compound that formally absorbs hydrogen (H₂) in a reaction. For instance, propylene may be reduced to propane in presence of a transition-metal hydride catalyst and hydrogen, i.e. formally absorbing hydrogen. The dehydrogenation step according to the invention proceeds, however, in the absence of a hydrogen acceptor as to release hydrogen. The term "acceptorless dehydrogenation" stems from the absence of a hydrogen acceptor.

An **"alkyl group"** used herein refers to a linear or branched aliphatic monovalent hydrocarbon group according to chemical formula CₙH₂ₙ₊₁, wherein n is 1 to 18, corresponding to a C₁ -C₁₈ alkyl group. Non-limiting examples of a C₁-C₆ alkyl group may comprise n-methyl, n-ethyl, n-propyl, *iso*-propyl, iso-butyl, sec-butyl, *tert*-butyl, pentyl, isoamyl and hexyl. Examples for an alkyl group with n ≥ 6 comprise n-hexyl, n-heptyl, n-octyl, n-nonyl, n-decyl, n-undecyl, n-dodecyl, n-trisdecyl, n-tetradecyl, n-pentadecyl, n-hexadecyl, n-heptadecyl, n- octadecyl, 1-methylpentyl, 1-methylhexyl, 1-methylheptyl, 1-methyloctyl, 1-methylnonyl, 1-methyldecanyl, 1-ethylbutyl, 1-ethylpentyl, 1-ethylhexyl, 1-ethylheptyl, 1-ethyloctyl, 1-ethylnonyl, 1-ethyldecanyl, 2-methylpentyl, 2-methylhexyl, 2-methylheptyl, 2-methyloctyl, 2-methylnonyl, 2-methyldecanyl, 2-ethylpropyl, 2-ethylbutyl, 2-ethylpentyl, 2-ethylhexyl, 2-ethylheptyl, 2-ethyloctyl, 2-ethylnonyl, 2-ethyldecanyl, 1,1-dimethylbutyl, 1,1-dimethylpentyl, 1,1-dimethylhexyl, 1,1-dimethylheptyl, 1,1-dimethyloctyl, 1,1-dimethylnonyl, 1,1-dimethyldecanyl, 1,2-dimethylbutyl, 1,2-dimethylpentyl, 1,2-dimethylhexyl, 1,2-dimethylheptyl, 1,2-dimethyloctyl, 1,2-dimethylnonyl, 1,2-dimethyldecanyl, 2-ethyl-1-methylbutyl, 2-ethyl-1-methylpentyl, 2-ethyl-1-methylhexyl, 2-ethyl-1-methylheptyl, 2-ethyl-1-methyloctyl, 2-ethyl-1-methylnonyl, 2-ethyl-1-methyldecanyl, 1-ethyl-2-methylpropyl, 1-ethyl-2-methylbutyl, 1-ethyl-2-methylpentyl, 1-ethyl-2-methylhexyl, 1-ethyl-2-methylheptyl, 1-ethyl-2-methyloctyl, 1-ethyl-2-methylnonyl and 1-ethyl-2-methyldecanyl.

A **"C₂-C₆ alkylene group"** used herein refers to di-radicals of the general formula CₙH₂ₙ derived from aliphatic hydrocarbons as defined above, wherein n is 2 to 6. For example, a substituent specified as an C₂-C₆ alkylene group may be a di-radical, such as -CH₂CH₂-, - CH₂CH(CH₃)CH₂- or -CH(CH₃)CH₂-.

The term **"halide"** as used herein refers to an anion derived from an element belonging to Group 17 of the periodic table, for example, fluoride, chloride, bromide, or iodide. For example, the halide may be chloride or bromide.

A **"C₃-C₇ cycloalkyl group"** used herein refers to a monovalent monocyclic saturated hydrocarbon group including 3 to 7 carbon atoms as ring-forming atoms, and non-limiting examples of the C₃-C₆ cycloalkyl group may include a cyclopropyl group, a cyclobutyl group, a cyclopentyl group, a cyclohexyl group, and a cycloheptyl group.

A **"C₅-C₇ cycloalkylene group"** used herein refers to a divalent di-radical derived from the cycloalkyl group as defined above. For example, a substituent specified as a C₅-C₇ cycloalkylene group may be a di-radical, such as cyclopentane-1,2-diyl or cyclohexane-1,2-diyl.

A **"C₆-C₁₄ aryl group"** used herein refers to a monovalent group including a carbocyclic aromatic system having 6 to 14 carbon atoms as ring-forming atoms. Non-limiting examples of the C₆-C₁₄ aryl group may include a phenyl group, a naphthyl group, an anthracenyl group and a phenanthrenyl group.

A **"C₂-C₉ heteroaryl group"** used herein refers to a monovalent group having a carbocyclic aromatic system including at least one hetero atom selected from N, O, P, and S as a ring-forming atom and 2 to 9 carbon atoms as the remaining ring-forming atoms. Non-limiting examples of the C₂-C9 heteroaryl group may include a pyridinyl group, a pyrimidinyl group, a pyrazinyl group, a triazolyl group, an imidazolyl group, a pyridazinyl group, a triazinyl group, a quinolinyl group, an isoquinolinyl group, furanyl group, pyrrolyl and thiophenyl.

A **"C₁-C₁₈ alkyl formate"** used herein refers to a formate according to HCO₂R with R corresponding to a C₁-C₁₈ alkyl group as defined above. For example, C₁ alkyl formate corresponds to a methyl formate (CAS: 107-31-3) or the methyl ester of formic acid. Further non-limiting examples of the C₁-C₁₈ alkyl formate may include ethyl formate, propyl formate, butyl formate, pentyl formate (amyl formate), hexyl formate, *iso*-propyl formate, *iso*-butyl formate.

A **"C₁-C₁₈ alcohol"** used herein refers to an alcohol according to HOR with R corresponding to a C₁-C₁₈ alkyl group as defined above. For example, C₁ alcohol corresponds to methanol. Further non-limiting examples of the C₁-C₁₈ alcohol may include ethanol, propanol, butanol, pentanol, hexanol, *iso*-propyl alcohol, *iso*-butyl alkohol.

### Example 1

Acceptorless dehydrogenation of MF to hydrogen and carbon dioxide according to equation 2 applying selected transition-metal hydride catalysts.

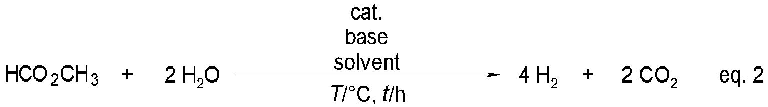

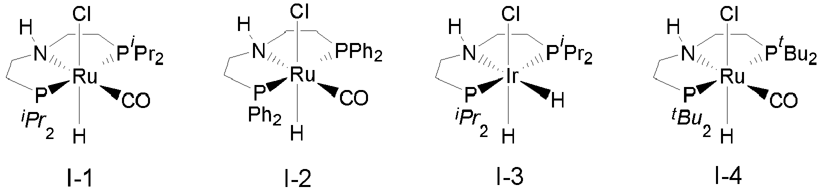

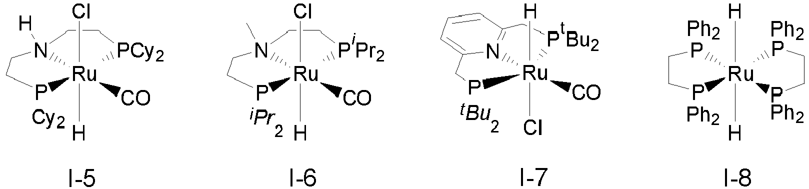

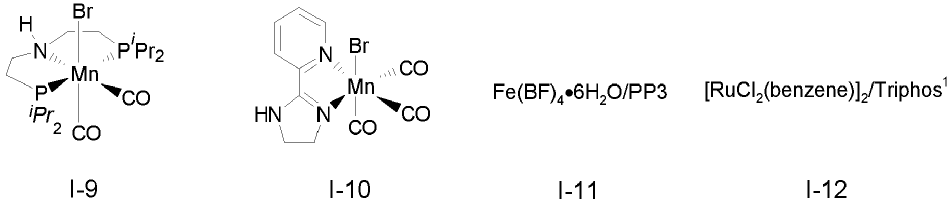

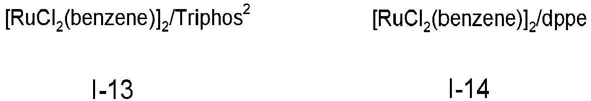

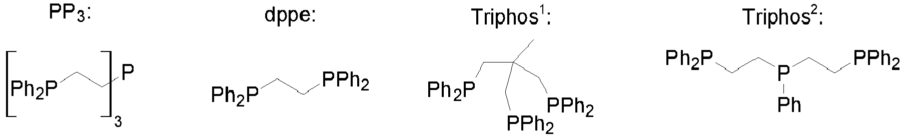

The transition-metal hydride catalysts and precursors according to 1-1, I-2, I-3, I-4, I-5, 1-11, I-9, I-12, I-13 and I-14 were bought from fine chemical suppliers (Strem Chemicals, Sigma-Aldrich, and TCI) and used as received. Catalyst I-8 was synthesized according to a procedure published elsewhere *(*Organometallics 1997, 16, 5569-5571). Catalyst 1-10 was synthesized according to a procedure published elsewhere *(*Green Chem. 2020, 22, 913-920). Catalyst I-6 was synthesized according to a procedure published elsewhere *(*J. Am. Chem. Soc. 2016, 138, 14890-14904.). Catalyst I-7 was synthesized according to a procedure published elsewhere *(*Angew. Chem. Int. Ed. 2010, 49, 1468-1471).MF was bought from fine chemical suppliers (Sigma-Aldrich) with 99% purity and was degassed. All substances were stored under argon atmosphere.

All experiments were carried out under argon atmosphere with exclusion of air. If elevated temperatures were desired, a heating source was applied. The volume of evolved gases was measured by manual gas burettes (capacity 1 L or 2 L). The production of hydrogen and carbon dioxide was verified by GC of the gas-phase. Representative reactions were reproduced to ensure the validity of results.

Under argon atmosphere 4 µmol transition-metal hydride catalyst (or 4 µmol metal ion source [M] with 12 µmol of the corresponding ligand [L] dppe or 16 µmol of the ligand tetraphos or 8 µmol of the triphosligands ) and 0.561g (10 mmol) KOH were added to a 100 mL autoclave. Then 10.0 mL triglyme, 5.2 mL MF (85 mmol), and 3.1 mL H₂O (170 mmol) were injected by a syringe. After that, the autoclave was flushed with N₂ (5 bar) and the pressure was released three times. The reaction was performed at 90°C for 20 h or till the equilibrium state was achieved. The autoclave was cooled to room temperature and the pressure was carefully released to a manual burette. The gas was analysed by GC. Additional CO₂ was collected *via* burette by adding HCI aqueous solution to the reaction liquid phase.

**Table 1:**

| **catalyst** | **t [h]** | **gas volume [mL]** | **H₂ [%]** | **CO₂ [%]** | **CO [ppm]** |
|---|---|---|---|---|---|
| I-1 | 19 | 2873 | 56.32 | 43.68 | 78 |
| I-2 | 20 | 3640 | 57.50 | 42.50 | <10 |
| I-3 | 20 | 3015 | 55.22 | 44.78 | 56 |
| I-4 | 20 | 3140 | 57.86 | 40.33 | 116 |
| I-5 | 20 | 2680 | 56.51 | 43.48 | 129 |
| I-6 | 20 | 2900 | 57.35 | 42.63 | 192 |
| I-7 | 20 | 3454 | 57.38 | 42.62 | <10 |
| I-8 | 20 | 3480 | 58.06 | 41.94 | not detectable |
| I-9 | 20 | 890 | 52.46 | 47.42 | 1238 |
| I-10 | 20 | 505 | 54.65 | 45.07 | 2773 |
| I-11 | 20 | 765 | 53.81 | 46.02 | 1722 |
| I-12 | 20 | 2607 | 53.68 | 46.27 | 451 |
| I-13 | 20 | 2310 | 57.73 | 42.25 | 236 |
| I-14 | 20 | 3108 | 56.23 | 43.76 | 82 |
| without | 20 | 36 | 60.74 | 34.30 | 49600 |

The results show that all examined transition-metal hydride catalysts induce the dehydrogenation of methyl formate, i.e. the release of hydrogen and carbon dioxide in the absence of a hydrogen acceptor. However, they differ in the amount of carbon monoxide, which is formed as undesired side product. A low CO-content is advantageous, because carbon monoxide may inhibit the electrodes of a H₂-fuel cell. Thus, in a preferred embodiment transition-metal hydride catalysts I-1 to I-8 may be used for dehydrogenation of methyl formate. Further, the precursor of the transition-metal hydride catalysts I-9 to I-14 may be used for dehydrogenation of methyl formate.

### Example 2

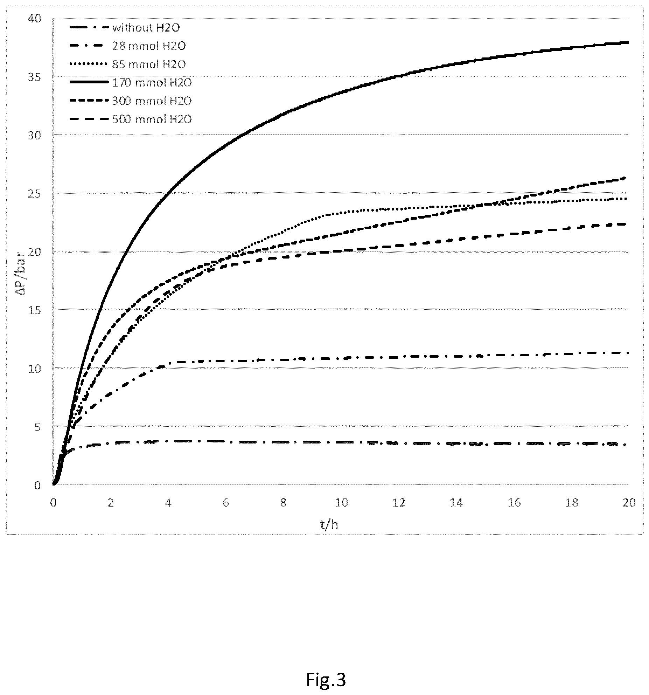

Example 2 demonstrates hydrogen can be generated from methyl formate applying a broad range (0 to 500 mmol) of water content. Applying the optimal amount of water according to equation 2 lead to best results regarding efficiency and selectivity of the reaction. Using more or less than 2 equivalents of water (<170 mmol or >170 mmol) decreases the released hydrogen amount as well as leads to lower selectivity by generating more carbon monoxide (Figure 3).

Under argon atmosphere 0.561g (10 mmol) KOH was added to a 100 mL autoclave. Then 4 µmol Ru catalyst I-2, solved in 2.0 mL triglyme, 8.0 mL triglyme, 5.2 mL MF (85 mmol), and 0.5 mL to 9.0 mL H₂O (28 - 500 mmol) were injected by a syringe. After that, the autoclave was flushed with N₂ (5 bar) and the pressure was released three times. The reaction was performed at 90°C for 20 h or till the equilibrium state was achieved. The autoclave was cooled to room temperature and the pressure was carefully released to a manual burette. The gas was analysed by GC. Additional CO₂ was collected *via* burette by adding HCI aqueous solution to the reaction liquid phase.

**Table 2:**

| **MF [mmol]** | **H₂O [mmol]** | **equivalents* H₂O** | **gas volume [mL]** | **H₂ [%]** | **CO₂ [%]** | **CO [ppm]** |
|---|---|---|---|---|---|---|
| 85 | 0 | 0 | 195 | 44.62 | 51.79 | 35900 |
| 85 | 28 | 0.33 | 1046 | 50.10 | 49.90 | 347 |
| 85 | 85 | 1 | 2397 | 57.80 | 42.18 | 220 |
| 85 | 170 | 2 | 3640 | 57.50 | 42.50 | <10 |
| 85 | 300 | 3.5 | 2321 | 55.14 | 44.82 | 420 |
| 85 | 500 | 5.9 | 2070 | 55.40 | 44.58 | 222 |

| | | | | | | |
|---|---|---|---|---|---|---|
| *referred to 1 equivalent of methyl formate (MF) | | | | | | |

### Example 3

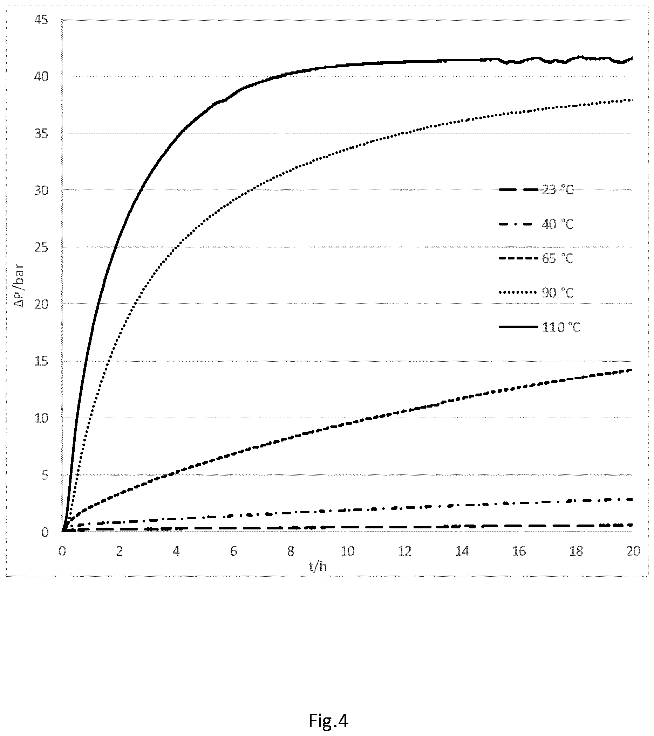

Example 3 demonstrates the increase of hydrogen evolution rate by increasing the temperature (Figure 4).

Under argon atmosphere 4 µmol Ru cat. I-2 and 0.561g (10 mmol) KOH mmol of KOH were added to a 100 mL autoclave. Then 10.0 mL triglyme, 5.2 mL MF (85 mmol), and 3.1 mL H₂O (170 mmol) were injected by a syringe. After that, the autoclave was flushed with N₂ (5 bar) and the pressure was released three times. The reaction was performed at different temperatures according to figure 4 in the range 23 to 110°C and stopped after 20 h. Then, the autoclave was cooled to room temperature and the pressure was carefully released to a manual burette. The gas was analysed by GC. Additional CO₂ was collected *via* burette by adding HCI aqueous solution to the reaction liquid phase.

**Table 3:**

| **T[°C]** | **t[h]** | **gas volume [mL]** | **H₂ [%]** | **CO₂[%]** | **CO [ppm]** |
|---|---|---|---|---|---|
| 23 | 20 | 86 | 50.71 | 49.29 | not detectable |
| 40 | 20 | 278 | 58.56 | 41.44 | not detectable |
| 65 | 20 | 1491 | 57.35 | 42.65 | not detectable |
| 90 | 20 | 3640 | 57.50 | 42.50 | <10 |
| 110 | 20 | 3595 | 58.83 | 41.13 | 367 |

The results show that the increased dehydrogenation rate correlates with an increasing temperature, however, it may be associated with undesired carbon monoxide release above 110°C. The dehydrogenation conditions may therefore comprise a reaction temperature of 20°C to 150°C. In a preferred embodiment the reaction temperature may be 40°C to 90°C.

### Example 4

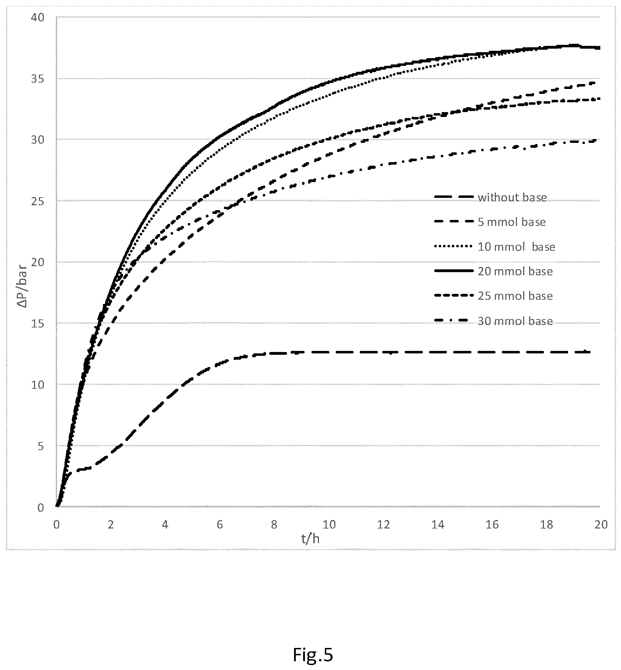

Example 4 demonstrates the necessity of applying a base (Figure 5) to achieve a high initial rate, a high conversion, and an appropriate selectivity.

Under argon atmosphere 4 µmol Ru catalyst I-2 and different amount of KOH were added to a 100 mL autoclave. Then 10.0 mL triglyme, 5.2 mL MF (85 mmol), and 3.1 mL H₂O (170 mmol) were injected by a syringe. After that, the autoclave was flushed with N₂ (5 bar) and the pressure was released three times. The reaction was performed at 90°C for 20 h. Then, the autoclave was cooled to room temperature and the pressure was carefully released to a manual burette. The gas was analysed by GC. Additional CO₂ was collected *via* burette by adding HCI aqueous solution to the reaction liquid phase.

**Table 4:**

| **KOH [mmol]** | **KOH [mol%]*** | **t [h]** | **gas volume [mL]** | **H₂ [%]** | **CO₂ [%]** | **CO [ppm]** |
|---|---|---|---|---|---|---|
| 0 | 0 | 20 | 1005 | 53.63 | 46.37 | 333 |
| 5 | 5.9 | 20 | 3180 | 56.76 | 43.21 | 176 |
| 10 | 11.8 | 20 | 3640 | 57.50 | 42.50 | <10 |
| 20 | 23.6 | 20 | 3735 | 57.91 | 42.09 | <10 |
| 25 | 29.4 | 20 | 3110 | 56.17 | 43.83 | 115 |
| 30 | 35.3 | 20 | 2750 | 57.27 | 42.69 | 438 |

| | | | | | | |
|---|---|---|---|---|---|---|
| *referred to 1 mol of methyl formate (MF) | | | | | | |

### Example 5

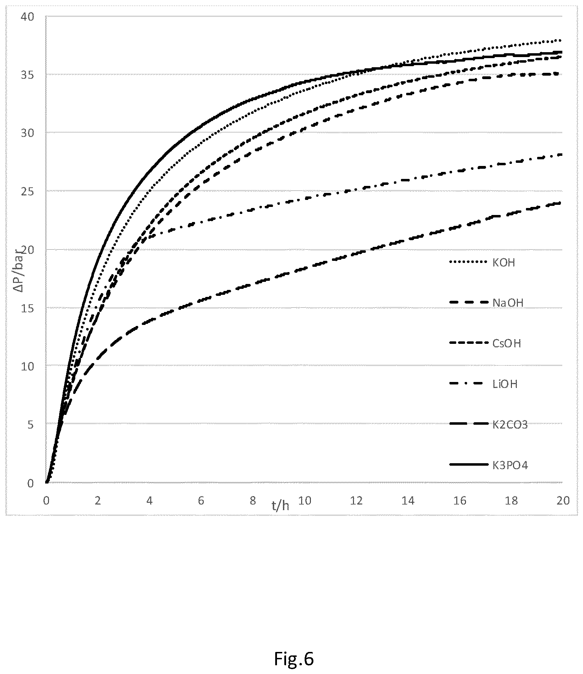

Example 5 shows the influence of different bases such as KOH, K₂CO₃ and K₃PO₄ (Figure 6).

Under argon atmosphere 4 µmol Ru catalyst I-2 and different base were added to a 100 mL autoclave. Then 10.0 mL triglyme, 5.2 mL MF (85 mmol), and 3.1 mL H₂O (170 mmol) were injected by a syringe. After that, the autoclave was flushed with N₂ (5 bar) and the pressure was released three times. The reaction was performed at 90°C for 20 h. Then, the autoclave was cooled to room temperature and the pressure was carefully released to a manual burette. The gas was analysed by GC. Additional CO₂ was collected *via* burette by adding HCI aqueous solution to the reaction liquid phase.

**Table 5:**

| **base** | **n [mmol]** | **gas volume [mL]** | **H₂ [%]** | **CO₂ [%]** | **CO [ppm]** |
|---|---|---|---|---|---|
| KOH | 10 | 3640 | 57.50 | 42.50 | <10 |
| NaOH | 10 | 3406 | 57.03 | 42.97 | <10 |
| CsOH | 10 | 3408 | 57.55 | 42.45 | <10 |
| LiOH | 10 | 2675 | 59.44 | 40.56 | 21 |
| K2CO3 | 10 | 2380 | 53.19 | 46.64 | 1666 |
| K3PO4 | 10 | 3460 | 58.83 | 41.17 | <10 |

### Example 6

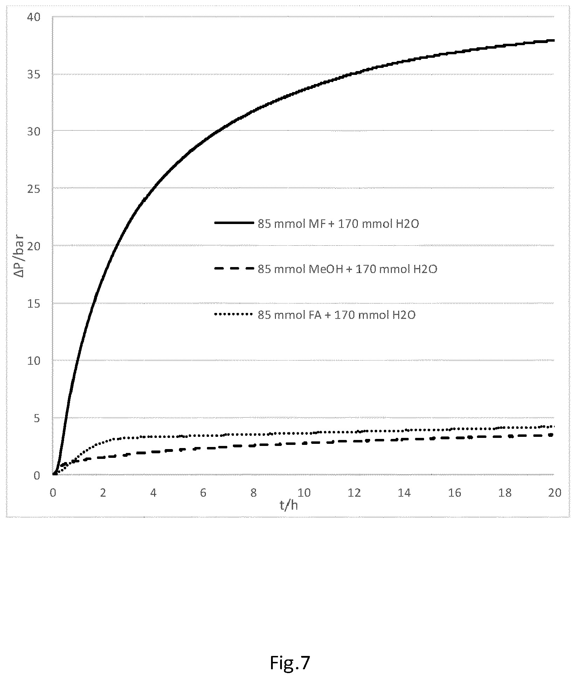

Example 6 demonstrates the improved initial reaction rate of hydrogen generation from MF compared to formic acid and methanol. Further, the selectivity is much lower for formic acid which leads to the formation of higher CO amounts (Figure 7).

Under argon atmosphere 4 µmol Ru catalyst I-2 and 0.561g (10 mmol) KOH were added to a 100 mL autoclave. Then 10.0 mL triglyme, 3.1 mL H₂O (170 mmol) and MF or HCO₂H or methanol (85 mmol) were injected by a syringe. After that, the autoclave was flushed with N₂ (5 bar) and the pressure was released three times. The reaction was performed at 90°C till the equilibrium state was reached. Then, the autoclave was cooled to room temperature and the pressure was carefully released to a manual burette. The gas was analysed by GC. Additional CO₂ was collected *via* burette by adding HCI aqueous solution to the reaction liquid phase.

**Table 6:**

| **substrate** | **H₂O [mmol]** | **gas volume [mL]** | **H# [%]** | **CO₂ [%]** | **CO [ppm]** |
|---|---|---|---|---|---|
| methanol | 170 | 311 | 78.88 | 21.12 | not detectable |
| formic acid | 170 | 359 | 52.22 | 47.42 | 3651 |
| methyl formate | 170 | 3640 | 57.50 | 42.50 | <10 |

### Example 7

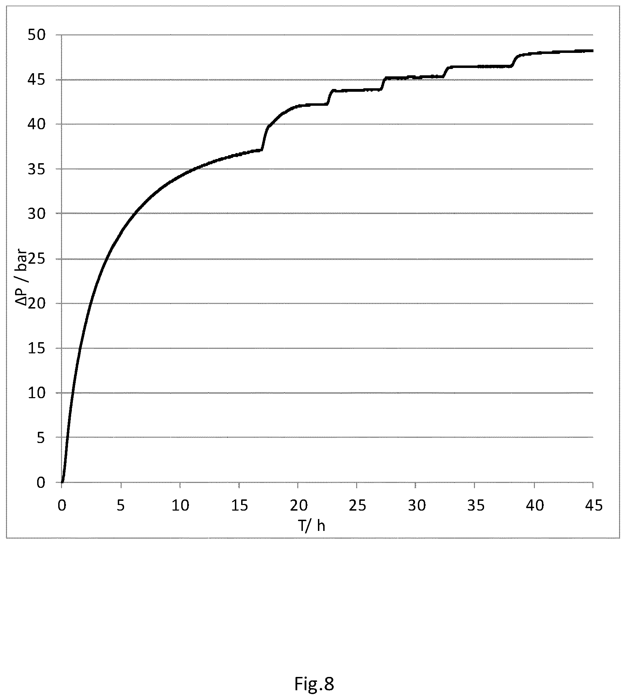

Example 7 demonstrates the dehydrogenation of MF to hydrogen and carbon dioxide performing several gas release and restart steps according to Figure 8. After 7 runs, 4230 mL of gas were evolved.

Under argon atmosphere 4 µmol Ru catalyst I-1 and 0.561g (10 mmol) KOH was added to a 100 mL autoclave. Then 10.0 mL triglyme, 5.2 mL MF (85 mmol), and 3.1 mL H₂O (170 mmol) were injected by a syringe. After that, the autoclave was flushed with N₂ (5 bar) and the pressure was released three times. The reaction was performed at 90°C. After the reaction lead to the equilibrium stat it was stopped. The autoclave was cooled to room temperature and the pressure was carefully released to a manual burette. The gas was analyzed by GC. The autoclave was then re-set again at 90°C and repeat this treatment for several times. After the 5^{th} run and before 6^{th} run, further KOH was added to restore the activity. Finally, additional CO₂ gas was collected *via* burette by adding HCI aqueous solution to the reaction liquid phase.

**Table 7:**

| **run** | **gas volume [mL]** | **H₂ [%]** | **CO₂ [%]** | **CO [ppm]** |
|---|---|---|---|---|
| 1 | 3440 | 59.77 | 40.23 | <10 |
| 2 | 360 | 69.83 | 30.16 | 38 |
| 3 | 50 | 48.56 | 51.44 | not detectable |
| 4 | 30 | 44.99 | 55.01 | not detectable |
| 5 | 15 | 13.15 | 86.84 | not detectable |
| 6^{a)} | 75 | 99.81 | 0.19 | not detectable |
| 7 | 35 | 99.82 | 0.18 | not detectable |
| liquid phase after adding 20% aqueous H2SO4 | 225 | | 100 | |
| sum/avarage | 4230 | 58.09 | 41.91 | <10 |

| | | | | |
|---|---|---|---|---|
| a) Another 10 mmol KOH were added before starting the 6^{th} run. | | | | |

### Example 8

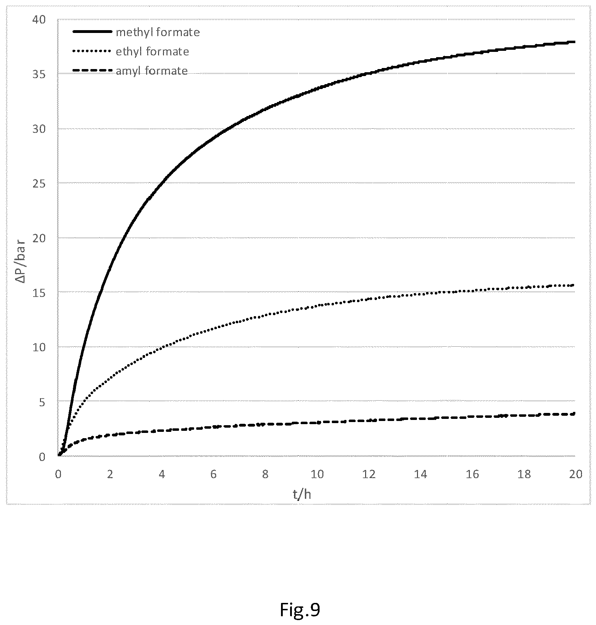

Example 8 demonstrates dehydrogenation of other esters than MF can be achieved by the same method (Figure 9).

Under argon atmosphere 4 µmol Ru catalyst I-2 and 0.561g (10 mmol) KOH were added to a 100 mL autoclave. Then 10.0 mL triglyme, 3.1 mL H₂O (170 mmol) and various formate esters (85 mmol) were injected by a syringe. After that, the autoclave was flushed with N₂ (5 bar) and the pressure was released three times. The reaction was performed at 90°C till the equilibrium state was reached. Then, the autoclave was cooled to room temperature and the pressure was carefully released to a manual burette. The gas was analysed by GC.

Additional CO₂ was collected *via* burette by adding HCI aqueous solution to the reaction liquid phase.

**Table 8:**

| **alkyl formate** | **gas volume [mL]** | **H₂ [%]** | **CO₂ [%]** | **CO [ppm]** |
|---|---|---|---|---|
| methyl formate | 3640 | 57.50 | 42.50 | <10 |
| ethyl formate | 1290 | 55.67 | 44.30 | 306 |
| amyl formate | 325 | 53.19 | 43.60 | 32103 |

### Example 9

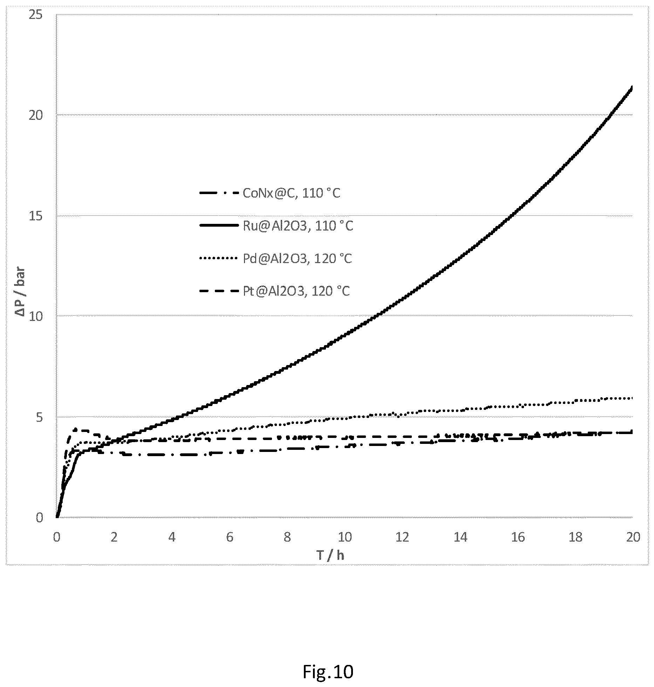

Example 9 demonstrates dehydrogenation of MF to hydrogen and carbon dioxide applying various heterogeneous catalysts. (Figure 10)

Catalysts are purchased from commercial suppliers: 5 wt.% ruthenium on alumina (5 wt.% Ru@Al₂O₃) from Alfa Aesar, 5 wt.% palladnium on alumina (5 wt.% Pd@Al₂O₃) from TCI and 5 wt.% platinum on alumina (5 wt.% Pt@Al₂O₃) from Strem Chemicalsor.

2.2 wt.% cobalt with multi-nitrogen on carbon (2.2 wt.% CoNx@C) is synthesized by using the method described in our publication: Angew. Chem. Int. Ed. 2017, 56, 16616 -16620.

Under argon atmosphere 30 mg 2.168 wt.% CoNx@C catalyst or 30 mg 5 wt.% Ru@Al₂O₃ or 30 mg 5 wt.% Pd@Al₂O₃ or 60 mg 5 wt.% Pt@Al₂O₃ and 0.561g (10 mmol) KOH were added to a 100 mL autoclave. Then 20.0 mL triglyme, 5.2 mL MF (85 mmol), and 3.1 mL H₂O (170 mmol) were injected by a syringe. After that, the autoclave was flushed with N₂ (5 bar) and the pressure was released three times. The reaction was performed at the provided temperatures. The volumes of gas evolution were measured by a manual burette. The reaction was stopped after 20 h. The gas phase was analysed by permanent gas GC after the autoclave was cooled to room temperature.

**Table 9:**

| **catalyst** / **[mg]** | **T[°C]** | **gas volume [mL]** | **H₂ [%]** | **CO₂[%]** | **CH₄[%]** | **CO [%]** |
|---|---|---|---|---|---|---|
| 5 wt.% Ru@Al₂O₃/ 30 | 110 | 1730 | 66.38 | 33.52 | not detectable | 0.1% |
| 2.2 wt.% CoNx@C / 30 | 110 | 150 | 67.57 | 31.79 | 0.03% | 0.61% |
| 5 wt.% Pd@Al₂O₃/ 30 | 120 | 310 | 57.20 | 40.95 | 82 ppm | 1.84% |
| 5 wt.% Pt@Al₂O₃/ 60 | 120 | 122 | 54.25 | 37.35 | 0.03% | 8.37% |

## Claims

1. A method for the reversible chemical storage of hydrogen, the method comprising:
1) a hydrogenation step, which comprises contacting hydrogen with carbon dioxide and a C₁-C₁₈ alcohol in the presence of a hydrogenation catalyst to effect storage of hydrogen by forming an C1-C18 alkyl formate; and
2) a dehydrogenation step, which comprises converting the C₁-C₁₈ alkyl formate into hydrogen and carbon dioxide in the presence of water, a base and
a) a transition-metal hydride catalyst or precursor thereof, the transition-metal hydride catalyst comprising:
a metal-ion selected from the group consisting of Ru, Ir, Mn, Co, Mo, Fe and Rh,
at least one hydride ligand coordinated to the metal-ion, and
i) a tridentate ligand coordinated to the metal-ion and selected from the group consisting of a *PNP*-chelating ligand, a *PNN-*chelating ligand, a PCP-chelating ligand, an *NCN*-chelating ligand, a *PCN*-chelating ligand, a PPP-chelating ligand and an *NNN*-chelating ligand, or
ii) one or two a bidentate ligand coordinated to the metal-ion and selected from a PP-chelating ligand or an *NN-*chelating ligand, or
iii) a tetradentate PPPP-chelating ligand coordinated to the metal-ion; or
b) a heterogeneous transition-metal catalyst.

2. The method according to claim 1, wherein the C₁-C₁₈ alkyl formate is a C₁-C₆ alkyl formate and the C₁-C₁₈ alcohol is a C₁-C₆ alcohol.

3. The method according to claims 1 or 2, wherein the metal-ion is selected from at least one of the group consisting of Ru, Ir, Fe and Mn.

4. The method according to one of the preceding, wherein the tridentate ligand of the transition-metal hydride catalyst is a *PNP*-chelating ligand according to formula (II): 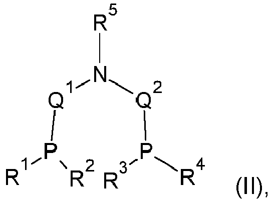 with
Q¹, Q² independently selected from the group consisting of C₂-C₆ alkylene group and C₅-C₇ cycloalkylene group;
R¹, R², R³, R⁴ independently selected from at least one of the group consisting of C₁-C₆ alkyl group, C₃-C₇ cycloalkyl group, C₆-C₁₄ aryl group, C₂-C₉ heteroaryl group and benzyl; and
R⁵ independently selected from at least one of the group consisting of from H, C₁ - C₈ alkyl group and C₃-C₇ cycloalkyl group.

5. The method according to claim 1, wherein the bidentate ligand is 1,2-bis(diphenylphosphino)ethane.

6. The method according to claim 1, wherein the transition-metal hydride catalyst is selected from at least one of the group consisting of the following compounds:

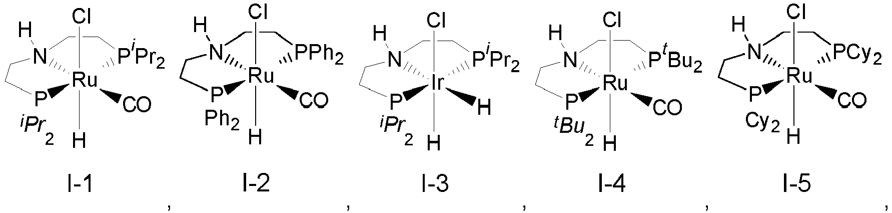

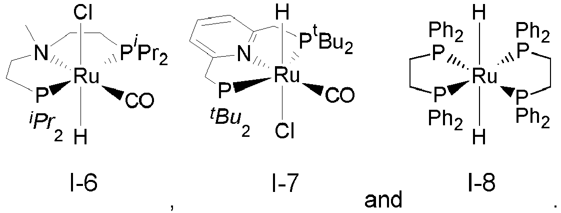

7. The method according to claim 1, wherein the precursor of the transition-metal hydride catalyst is selected from at least one of the group consisting of the following compounds: 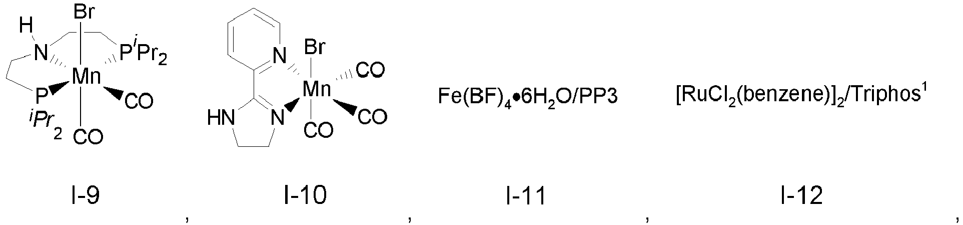 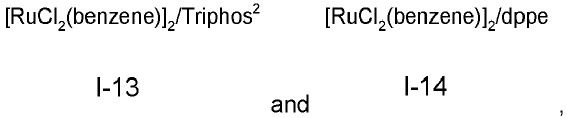 wherein

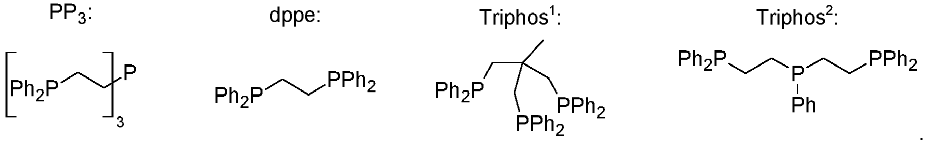

8. The method according to one of the preceding claims, wherein the transition-metal hydride catalyst or precursor thereof is present at 0.001 mol% to 0.01 mol% referred to the C1-C18 alkyl formate.

9. The method according to claim 1, wherein the heterogeneous transition-metal catalyst comprises at least one of a metal selected from the group consisting of ruthenium, palladium, platinum and cobalt.

10. The method according to one of the preceding claims, wherein the base is selected from at least one of the group consisting of KOH, NaOH, CsOH, LiOH and K₃PO₄.

11. The method according to one of the preceding claims, wherein the base is present at 5 mol% to 35 mol% referred to the C₁-C₁₈ alkyl formate.

12. The method according to one of the preceding claims, wherein water is present at 1.5 to 2.5 equivalents per mol C₁-C₁₈ alkyl formate.

13. The method according to one of the preceding claims, wherein the dehydrogenation conditions comprise a reaction temperature of 20°C to 150°C.

14. The method according to claim 1, wherein the hydrogenation catalyst corresponds to the transition-metal hydride catalyst or to the heterogeneous transition-metal catalyst according to claim 1.

15. A reversible chemical storage system for hydrogen construed for performing the method of claim 1.
